# FASCICULE DE BREVET EUROPEEN

(11) **EP 1 059 185 B1**
(45) Date de publication et mention de la délivrance du brevet: **09.03.2005**
(21) Numéro de dépôt: 00401602.8
(22) Date de dépôt: 07.06.2000
(51) Int. Cl.: B60K 15/077, F02M 37/10

(54) **Réservoir de carburant à réserve positive intégrée.**
Kraftstoffbehälter mit eingebautem Reservoir
In-tank fuel reservoir

(30) Priorité: 08.06.1999 FR 9907196
(43) Date de publication de la demande: 13.12.2000
(73) Titulaire: Peugeot Citroen Automobiles SA, 92200 Neuilly sur Seine (FR)
(72) Inventeur: Burguburu, Philippe, 78000 Versailles (FR)
(74) Mandataire: Berger, Helmut

(56) Documents cités:
- DE-A- 19 523 634
- DE-A- 19 619 992

## Description

L'invention concerne un réservoir de carburant à réserve positive intégrée, du type comportant un récipient entourant une pompe à carburant destinée à envoyer du carburant sous pression au moteur et dont les parois ont une hauteur suffisante pour assurer un niveau minimal autour de la pompe lorsque la quantité de carburant dans le réservoir s'épuise.

Dans les réservoirs de carburant de ce type, qui sont connus, le récipient, communément appelé "bol", se remplit grâce aux mouvements du carburant lorsque le véhicule roule. Un dispositif annexe alimente en permanence la réserve. En général, le retour du carburant du moteur au réservoir se fait dans la réserve.

Deux problèmes se posent alors, notamment pour les gazoles : la filtration du carburant et l'évacuation de l'eau. En effet, l'avantage d'un puisage de façon très complète du carburant restant dans le réservoir a pour inconvénient de provoquer une concentration importante de polluants dans la réserve et d'y amener de l'eau contenue dans le réservoir. La pompe immergée dans la réserve est certes protégée par des filtres dont la surface est cependant limitée. Lorsque les polluants sont de nature minérale, ils se déposent au fond de la réserve et ne s'accumulent pas sur le filtre. Ils retombent au fond par gravité à chaque arrêt de la pompe. Un problème réel se pose lorsque les polluants sont de nature organique, comme c'est fréquemment le cas avec les gazoles, ou encore lorsque la qualité du gazole n'est pas adaptée aux conditions climatiques, ce qui risque d'entraîner des floculations.

Il y a donc un risque élevé de colmatage du filtre et la situation devient critique lorsque la pompe n'a qu'un faible pouvoir d'aspiration ou que les organes aval exigent un seuil minimal de pression pour fonctionner. Une augmentation de la taille des filtres conventionnels ou à surface de filtrage "en profondeur" n'est pas possible compte tenu des dimensions du bol de réserve positive. Il en est de même pour l'eau contenue dans le réservoir qui est systématiquement rassemblée dans le récipient et ne peut sortir que par la pompe. Or, la plus petite quantité d'eau entrant ou se condensant dans le réservoir se retrouve intégralement dans le récipient et est envoyée vers le moteur. Cette eau présente des inconvénients dans les périodes de transition de température ou elle gèle dans les tuyaux, formant des billes de glace qui colmatent les filtres. Dans le cas du gazole, cette eau favorise le développement de bactéries de par la température plus élevée du carburant dans le bol que dans le réservoir.

L'invention a pour but de proposer un réservoir de carburant du type défini plus haut et dont la réserve positive intégrée est conçue pour pallier les inconvénients de l'état de la technique, qui viennent d'être énoncés.

Pour atteindre ce but, le réservoir à carburant selon l'invention est tel que décrit par la revendication 1.

Selon une caractéristique de l'invention, le bloc filtrant tel qu'un bloc de mousse entoure la pompe et comporte des passages ménagés dans ce bloc pour augmenter la surface filtrante.

L'invention sera mieux comprise, et d'autres buts, caractéristiques, détails et avantages de celle-ci apparaîtront plus clairement au cours de la description explicative qui va suivre faite en référence aux dessins schématiques annexés illustrant un mode de réalisation de l'invention et dans lesquels :
- La figure 1 est une vue schématique d'un réservoir de carburant équipé d'une réserve positive intégrée selon la présente invention;
- la figure 2 est une vue à plus grande échelle du dispositif de réserve selon l'invention montré sur la figure 1;
- la figure 3 est une vue en coupe selon la ligne III-III de la figure 2;
- la figure 4 est une vue en coupe selon la ligne IV-IV de la figure 2;
- la figure 5 est une vue en coupe selon la ligne V-V de la figure 2;
- la figure 6 est une vue en coupe selon la ligne VI-VI de la figure 2;
   la figure 7 est une vue en coupe selon la ligne VII-VII de la figure 2 et
- la figure 8 est une vue en coupe selon la ligne VIII-VIII de la figure 2.

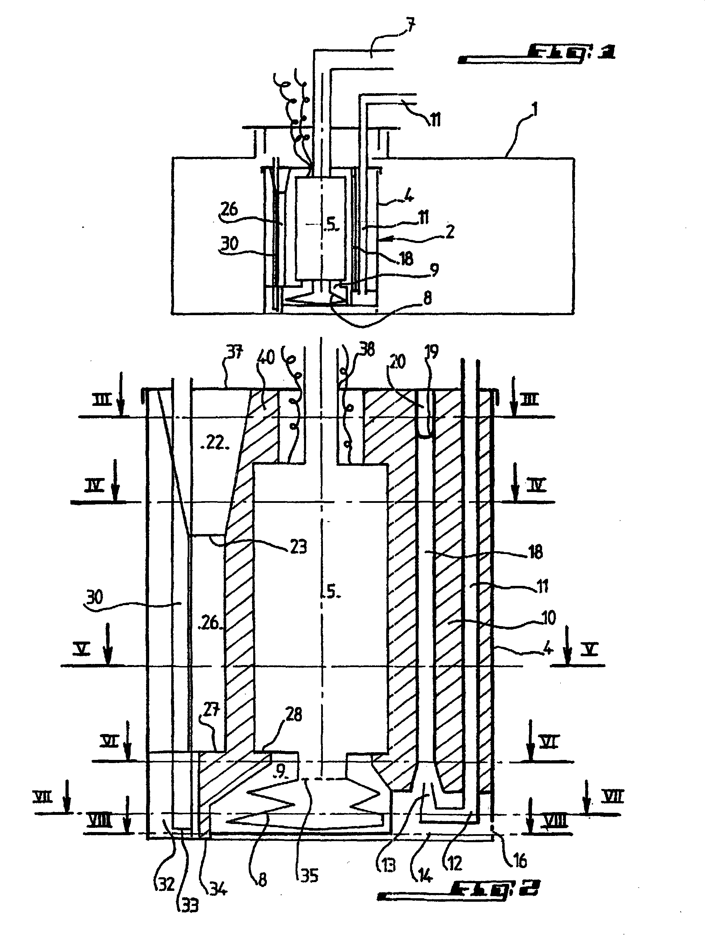

La figure 1 représente en 1 un réservoir de carburant et en 2 un dispositif de puisage avec une réserve positive, intégrée au réservoir 1. Le dispositif de puisage comporte, à l'intérieur d'un récipient 4, une pompe à carburant 5 qui envoie du carburant sous pression au moteur par un tube de sortie 7. La pompe aspire du carburant à travers une crépine 8 de protection de la pompe se trouvant dans la zone d'aspiration 9.

Le récipient 4 enferme un bloc filtrant par exemple en mousse qui en occupe sa majeure partie. Ce bloc entoure la pompe 5 et est configuré pour maintenir celle-ci.

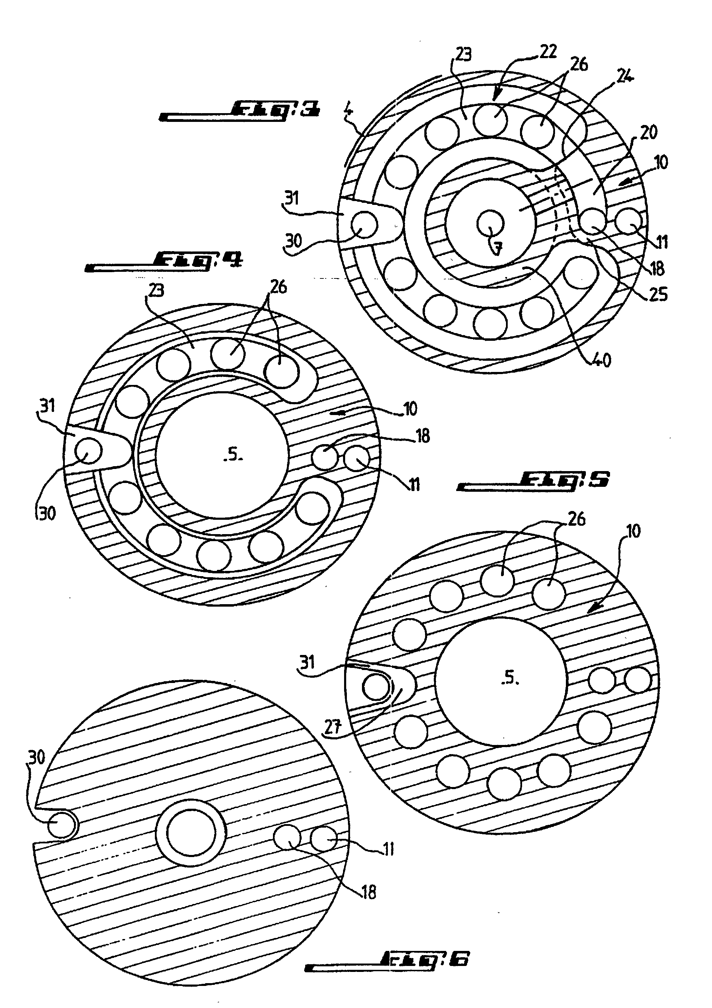

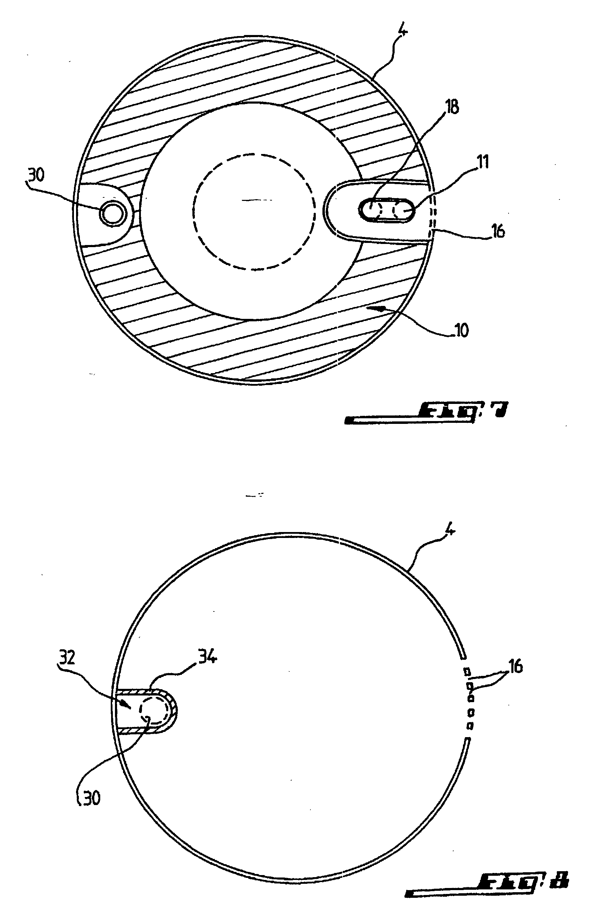

Le dispositif de puisage comporte un tube 11 de retour de carburant excédentaire qui traverse axialement le bloc filtrant 10 et dont l'extrémité inférieure 12 (fig. 2) alimente un venturi 13 disposé dans un espace d'aspiration 14. Ce dernier communique avec le réservoir à travers une grille de protection 16. Celle-ci est dimensionnée de sorte que les matières qui le traversent ne puissent pas obturer le mécanisme du venturi. Celui-ci est disposé en bas d'un tube 18 destiné à remonter le carburant au sommet de la réserve positive. Ce tube s'étend également parallèlement à l'axe du récipient dans le bloc filtrant. L'extrémité supérieure 19 du tube ascendant 18 se trouve à un niveau en-dessous de la face supérieure du bloc filtrant 10. En se reportant à la figure 3 on constate que le tube 18, par son extrémité 19, s'ouvre dans une encoche en forme d'arc de cercle 20 ménagée dans le bloc à partir de sa surface supérieure. Le tube 18 se trouve à une extrémité de l'encoche, l'autre extrémité s'ouvrant dans un évidement en forme d'arc de cercle 22 (fig. 2) pratiqué également à partir de la face supérieure du bloc 10 et dont la largeur diminue progressivement à partir de la surface supérieure jusqu'au fond 23 qui s'étend perpendiculairement à l'axe du récipient. Le fond 23 est situé plus bas que le fond de l'encoche 19 en formant une marche verticale indiquée en 24 sur la figure 3. L'évidement 22 s'étend angulairement concentriquement autour de l'axe du récipient pratiquement jusqu'au tube 18 en laissant subsister seulement une épaisseur de bloc de mousse 25 relativement faible.

A partir du fond 23 de l'évidement 22 sont pratiqués un certain nombre de canaux 26 qui s'étendent parallèlement à l'axe du bloc jusqu'à un niveau 27 correspondant à un épaulement annulaire 28 en saillie vers l'axe du bloc et sur lequel repose le corps de la pompe 5.

Le dispositif de réserve comporte en outre un tube 30 d'évacuation de surplus de carburant qui s'étend parallèlement à l'axe du récipient dans un évidement 31 pratiqué dans le bloc filtrant 10 à partir de la périphérie de celui-ci, dans une zone diamétralement opposée aux tubes 11 et 18. Cet évidement s'étend sur toute la hauteur du bloc 10 en ayant cependant une profondeur radiale réduite en 32 à partir du niveau 27 du bloc. L'extrémité inférieure 33 du tube 30 se trouve à une faible distance du fond du récipient de réserve et est crénelée, ce qui permet l'aspiration dans le bas de la zone 32 tout en laissant un passage suffisant au carburant lorsque le bas du tube touche le fond du bol.

En se reportant à la figure 8 on constate qu'au niveau de l'extrémité inférieure du bloc filtrant 10, celui-ci présente une nervure 34 faisant saillie dans la direction de l'axe du bloc. Cette nervure prend appui sur le fond du récipient 4 en s'étendant autour de l'extrémité inférieure 33 du tube d'évacuation 30 jusqu'à la périphérie du bloc. Concernant l'extrémité d'aspiration 33 du tube 30, elle est nettement en-dessous du niveau bas 35 d'aspiration de la pompe.

On constate encore que le récipient de réserve positive est fermé par un couvercle 37 comportant un orifice 38 de section très légèrement supérieure à celle du tube 7 et destiné à évacuer les gaz produits par le carburant chaud ou l'air lors du premier remplissage. Pour empêcher le colmatage de cette ouverture, le bloc de mousse 10 entoure l'orifice 38 par une excroissance 40 en appui sur le couvercle 37 qui exclut tout passage d'air ou de carburant non filtré.

Le dispositif de réserve positive, qui vient d'être décrit, fonctionne de la manière suivante :

Le carburant excédentaire arrivant par la canalisation 11 et par le venturi 13 aspire le carburant se trouvant dans la zone 14 protégée par la grille 16. Le carburant remonte alors par le tube 18 et se déverse dans la rainure 20 et l'évidement 22 ménagés dans le bloc filtrant 10. Puis il s'écoule dans les canaux axiaux 26, qui augmentent la surface de filtration, jusqu'en bas du bloc de mousse filtrante 10.

Le débit de carburant arrivant par le tube 18 se trouve ainsi enfermé dans la réserve positive 4 et s'en échappe par deux voies différentes. D'une part, il est aspiré par la pompe 5 à travers le bloc de mousse 10 et les différents canaux 26 jusqu'à la zone 9, puis à travers la crépine 8. Ensuite il est refoulé vers le moteur par le tube 7. D'autre part, il est refoulé dans le tube 30 par la légère surpression provoquée par la perte de charge de ce débit dans le tube 30. En effet, la réserve positive étant fermée et le débit arrivant par le tube 18 étant supérieur à celui aspiré par la pompe 5, l'excédent ne peut que s'échapper par le tube 30. Cette évacuation par ce tube puisant du liquide par son extrémité inférieure crénelée au point le plus bas de la réserve positive, évacuera l'eau qui s'y rassemblera. Ainsi, le niveau de l'eau ne peut pas atteindre l'orifice d'aspiration 35 situé nettement au-dessus et protégé par la crépine 8.

Il ressort de la description de l'invention qui vient d'être faite que celle-ci procure des avantages considérables. En effet, l'invention permet d'éliminer l'eau introduite dans le récipient avant qu'elle ne soit aspirée par la pompe, grâce à un tube de débordement qui évacue le trop-plein du récipient en puisant dans le fond du bol, là où l'eau se rassemble. Pour faire circuler du carburant dans ce tube, on crée une légère surpression dans le bol en le fermant et en réalisant un orifice au sommet du bol pour l'évacuation de l'air au moment du premier remplissage ou des gaz produits par le carburant chaud en fonctionnement normal provenant du carburant réchauffé retournant au réservoir. Cet orifice sera protégé du colmatage par une partie du filtre en mousse. D'autre part, l'invention permet d'augmenter la surface de filtrage du carburant aspiré par la pompe, en remplissant la majeure partie du volume du bol de mousse à cellules ouvertes. En pratiquant des évidements et canaux dans le bloc de mousse, on crée une très grande surface d'entrée de filtrage. Enfin, on utilise cette mousse pour supporter le corps de pompe, ce qui simplifie la structure interne du bol de puisage.

## Revendications

1. Réservoir de carburant à réserve positive intégrée, du type comportant un récipient entourant une pompe à carburant destinée à envoyer du carburant sous pression au moteur, le réservoir étant tel que la réserve comporte un bloc filtrant (10) qui occupe la majeure partie du récipient (4) et à travers lequel passe le carburant avant d'être aspiré par la pompe (5).

2. Réservoir selon la revendication 1, **caractérisé en ce que** le bloc filtrant (10), tel qu'un bloc de mousse, entoure la pompe (5) et comporte des passages (26) pour augmenter la surface filtrante.

3. Réservoir selon l'une des revendications 1 ou 2, **caractérisé en ce que** le bloc comporte une cavité centrale de réception de la pcmpe (5) et une surface (28) de support sur laquelle repose la base de la pompe (5).

4. Réservoir selon la revendication 2, **caractérisé en ce que** les passages précités sont formés par des canaux (26) pratiqués dans le bloc filtrant (10) et s'étendant parallèlement à l'axe du bloc.

5. Réservoir selon l'une des revendications 1 à 4, **caractérisé en ce que** la réserve comporte un tube (18) disposé à l'intérieur du bloc filtrant (10), parallèlement à l'axe de celui-ci, et à travers lequel le carburant circule de bas en haut et par l'extrémité supérieure (19) duquel le carburant se déverse sur le bloc filtrant pour traverser celui-ci sous l'effet de l'aspiration de la pompe (5) à la partie inférieure de la réserve.

6. Réservoir selon la revendication 5, **caractérisé en ce qu'**au tube (18) précité est associé un venturi (13) assurant l'alimentation du tube par un tube de retour de carburant (11) ainsi qu'une grille de protection (16) de communication avec le reste du réservoir.

7. Réservoir selon l'une des revendications 1 à 6, **caractérisé en ce que** la réserve comporte des moyens (30) pour évacuer l'eau présente dans le carburant contenu dans la réserve.

8. Réservoir selon la revendication 7, **caractérisé en ce que** les moyens d'évacuation d'eau comprennent un tube (30) sensiblement parallèle à l'axe de la pompe et dont l'extrémité inférieure débouche dans la partie inférieure de la réserve, à un niveau inférieur au niveau d'aspiration (35) de la pompe, tandis que l'extrémité supérieure débouche dans le réservoir, et des moyens pour créer une surpression dans la réserve.

9. Réservoir selon la revendication 8, **caractérisé en ce que** les moyens précités de production de la surpression sont formés par un couvercle de fermeture (37) de la réserve et par un débit d'aspiration de la pompe inférieur au débit de carburant entrant dans la réserve.

10. Réservoir selon la revendication 9, **caractérisé en ce que** le couvercle de fermeture de la réserve comporte un orifice (38) pour l'évacuation des gaz éventuellement présents dans la réserve.

11. Réservoir selon la revendication 10, **caractérisé en ce que** le bloc filtrant (10) comporte une partie qui entoure l'orifice (38) dans le couvercle pour empêcher le colmatage de l'orifice.

## Patentansprüche

1. Kraftstoffbehälter mit eingebautem Reservoir vom Typ mit einem Behältnis, das eine Kraftstoffpumpe umschließt, die dazu bestimmt ist, dem Motor Kraftstoff unter Druck zuzuleiten, wobei der Behälter derart ist, dass das Reservoir einen Filterblock (10) enthält, der den Großteil des Behältnisses (4) einnimmt und durch den der Kraftstoff fließt, bevor er von der Pumpe (5) angesaugt wird.

2. Behälter nach Anspruch 1, **dadurch gekennzeichnet, dass** der Filterblock (10), wie etwa ein Schaumstoffblock, die Pumpe (5) umschließt und Durchgänge (26) enthält, um die Filterfläche zu erhöhen.

3. Behälter nach Anspruch 1 oder 2, **dadurch gekennzeichnet, dass** der Block einen mittleren Hohlraum zum Aufnehmen der Pumpe (5) und eine Tragfläche (28) enthält, auf der die Basis der Pumpe (5) aufsitzt.

4. Behälter nach Anspruch 2, **dadurch gekennzeichnet, dass** die vorgenannten Durchgänge aus Kanälen (26) gebildet sind, die im Filterblock (10) ausgeführt sind und sich parallel zur Achse des Blocks erstrecken.

5. Behälter nach einem der Ansprüche 1 bis 4, **dadurch gekennzeichnet, dass** das Reservoir ein Rohr (18) enthält, das innerhalb des Filterblocks (10) parallel zur Achse desselben angeordnet ist und durch das der Kraftstoff von unten nach oben strömt und über dessen oberes Ende (19) der Kraftstoff auf den Filterblock überläuft, um diesen unter der Saugwirkung der Pumpe (5) am unteren Teil des Reservoirs zu durchqueren.

6. Behälter nach Anspruch 5, **dadurch gekennzeichnet, dass** dem vorgenannten Rohr (18) eine Venturi-Düse (13) zugeordnet ist, welche die Speisung des Rohrs über ein Kraftstoffrücklaufrohr (11) gewährleistet, sowie ein Schutzgitter (16) zur Kommunikation mit dem restlichen Behälter.

7. Behälter nach einem der Ansprüche 1 bis 6, **dadurch gekennzeichnet, dass** das Reservoir Mittel (30) enthält, um das im Kraftstoff anfallende Wasser abzuführen, der im Reservoir enthalten ist.

8. Behälter nach Anspruch 7, **dadurch gekennzeichnet, dass** die Wasserabführmittel ein im wesentlichen parallel zur Achse der Pumpe verlaufendes Rohr (30) enthalten, dessen unteres Ende in den unteren Teil des Reservoirs mündet, und zwar auf einem Niveau, das unterhalb des Saugniveaus (35) der Pumpe liegt, während das obere Ende in den Behälter mündet, sowie Mittel zum Erzeugen eines Überdrucks im Reservoir.

9. Behälter nach Anspruch 8, **dadurch gekennzeichnet, dass** die vorgenannten Mittel zum Erzeugen des Überdrucks durch einen Schließdeckel (37) des Reservoirs und durch eine Saugfördermenge der Pumpe gebildet werden, die kleiner ist als die in das Reservoir eintretende Kraftstofffördermenge.

10. Behälter nach Anspruch 9, **dadurch gekennzeichnet, dass** der Schließdeckel des Reservoirs eine Öffnung (38) zum Abführen von im Reservoir eventuell anfallender Gase enthält.

11. Behälter nach Anspruch 10, **dadurch gekennzeichnet, dass** der Filterblock (10) einen Bereich enthält, der die Öffnung (38) im Deckel umfasst, um das Verstopfen der Öffnung zu verhindern.

## Claims

1. Fuel tank with built-in reservoir, of the type featuring a container set around a fuel pump that is designed to send pressurised fuel to the engine, the tank being such that the reservoir has a filtration block (10) which occupies the greater part of the container (4) and through which the fuel passes before being aspirated by the pump (5).

2. Tank according to claim 1, **characterised in that** the filtration block (10), for instance a block of foam, is set around the pump (5) and has passages (26) to increase the filtration surface.

3. Tank according to either of claims 1 or 2, **characterised in that** the block has a central cavity for accommodating the pump (5) and a supporting surface (28) upon which the base of the pump (5) rests.

4. Tank according to claim 2, **characterised in that** the aforesaid passages are formed by channels (26) which have been made in the filtration block (10) and which extend parallel to the axis of the block.

5. Tank according to any of claims 1 to 4, **characterised in that** the reservoir features a pipe (18) disposed inside the filtration block (10) and parallel to the axis thereof, and through which the fuel circulates from the bottom to the top and via the top end (19) of which the fuel flows over the filtration block before passing through the latter under the aspirating action of the pump (5) in the bottom part of the reservoir.

6. Tank according to claim 5, **characterised in that** operatively associated with the aforesaid pipe (18) is a venturi (13) which ensures that the pipe is fed by a fuel return pipe (11), as well as a protective grid (16) for communicating with the rest of the tank.

7. Tank according to any of claims 1 to 6, **characterised in that** the reservoir has means (30) for evacuating the water present in the fuel contained in the reservoir.

8. Tank according to claim 7, **characterised in that** the water evacuating means comprise a pipe (30) substantially parallel to the axis of the pump and the bottom end of which opens out into the bottom part of the reservoir, at a level lower than the pump's suction level (35), while the top end opens out into the tank, along with means for creating an excess pressure in the reservoir.

9. Tank according to claim 8, **characterised in that** the aforesaid means for producing the excess pressure are formed by a reservoir sealing cover (37) and by a pump suction flow rate lower than the fuel's flow rate as it enters the reservoir.

10. Tank according to claim 9, **characterised in that** the reservoir sealing cover has a port (38) for the evacuation of any gases that may be present in the reservoir.

11. Tank according to claim 10, **characterised in that** the filtration block (10) includes a part that surrounds the port (38) in the cover in order to prevent the port from becoming clogged up.
